Europäisches Patentamt

European Patent Office

Office européen des brevets

(11) Veröffentlichungsnummer: **0 013 986**
**B1**

(12) # EUROPÄISCHE PATENTSCHRIFT

(45) Veröffentlichungstag der Patentschrift:
18.05.83

(21) Anmeldenummer: 80100361.7

(22) Anmeldetag: 24.01.80

(51) Int. Cl.³: **C 01 C 1/10, C 01 F 11/46,**
**C 01 F 11/00**

(54) Verfahren zum Abtreiben von Ammoniak aus ammoniakhaltigen Lösungen, insbesondere Kokereiabwässern.

(30) Priorität: 29.01.79 DE 2903289

(43) Veröffentlichungstag der Anmeldung:
06.08.80 Patentblatt 80/16

(45) Bekanntmachung des Hinweises auf die Patenterteilung:
18.05.83 Patentblatt 83/20

(84) Benannte Vertragsstaaten:
BE DE FR GB IT NL

(56) Entgegenhaltungen:
FR-A-2 016 949
GB-A-1 007 118
US-A-2 594 723
CEMICAL ABSTRACTS, Band 71, Nr. 13, 29. Dezember 1969, Zusammenfassung Nr. 126644x, Seite 166, Columbus, Ohio, US

(73) Patentinhaber: Dr. C. Otto & Comp. Gesellschaft mit beschränkter Haftung, Christstrasse 9,
D-4630 Bochum 1 (DE)

(72) Erfinder: Haese, Egon, Am Acker 12, D-4630 Bochum (DE)
Erfinder: Willms, Rolf, Dr. rer. nat., Dipl.-Chem., im Röhrchen 40, D-5810 Witten 3 (DE)
Erfinder: Schultheiss, Karl Dieter, Am Waldschlösschen 32, D-4630 Bochum (DE)

(74) Vertreter: Radt, Wilhelm Peter, Dr. et al; Patentanwälte Radt, Finkener, Ernesti Heinrich-König-Strasse 119,
D-4630 Bochum 1 (DE)

# Verfahren zum Antreiben von Ammoniak aus ammoniakhaltigen Lösungen, insbesondere Kokereiwässern

Die Erfindung betrifft ein Verfahren zum Abtreiben von Ammoniak aus ammoniakhaltigen Lösungen, insbesondere Kokereiwässern, bei dem das in den Lösungen enthaltene freie Ammoniak in einer ersten Abtreiberkolonne durch Einleiten von Dampf ausgetrieben und die Lösungen sowie eine in wässriger Lösung vorliegende Erdalkaliverbindung in einen Reaktionsraum eingeleitet und darin durchmischt werden, worauf das in Wasser schwerlösliche Fällungsprodukt der Erdalkaliverbindung aus dem Reaktionsraum abgezogen und die behandelte klare Lösung in eine zweite Abtreiberkolonne geleitet wird.

Lösungen, die solche Ammoniumverbindungen enthalten, werden z. B. aus Anlagen gewonnen, bei denen Ammoniak zur Entfernung von Schwefeldioxid und anderen sauren Komponenten aus Abgasen eingesetzt wird. Zur Rückgewinnung des Ammoniaks aus dem entstandenen Ammoniumsulfat bzw. Ammoniumsulfit wird die Lösung in der Regel mit Kalkmilch oder Kalkwasser versetzt, wobei das $NH_3$ durch das Ca substituiert wird. Die behandelte Lösung wird dann zur Abtrennung des Schlammes, der aus den in Wasser schwerlöslichen Fällungsprodukten des Calciums besteht, bei einer Absetzzeit von mehreren Stunden in Absetzbehälter geleitet. Die klare Flüssigkeit, die das freigesetzte $NH_3$ enthält, wird in der Regel einem $NH_3$-Abtrieb zugeführt. Das Ausbringen des gewonnenen Kalkschlammes aus dem Absetzgefäss ist besonders schwierig. Der Schlamm enthält mindestens 50% Feuchtigkeit und damit auch die entsprechende Menge $NH_3$. Die Begasung solcher Schlämme, z. B. mit Wasserdampf, ist kostspielig, weil der Vorgang in geschlossenen Behältern erfolgen muss. Abgesehen davon ist die Deponie solcher Schlämme nicht unproblematisch.

Kokereiwässer enthalten neben anderen Stoffen unter anderem freies und gebundenes Ammoniak. Es gehört zum Stand der Technik, diese Wässer zweistufig in der Art zu behandeln, dass in einer ersten Abtreiberstufe zunächst das freie Ammoniak durch Dämpfe oder Brüden aus der zweiten Stufe abgetrieben wird. Das Kokereiwasser wird dabei oben auf eine Kolonne gefahren und durchläuft von oben nach unten eine Anzahl von Austauschböden, während der Dampf oder die Brüden aus der zweiten Kolonne von unten eingefahren werden. Auf diese Weise werden das freie Ammoniak und sonstige, nicht gebundene Komponenten ausgetrieben.

Zum Abtrieb des gebundenen Ammoniaks wird dem Ablauf aus der ersten Abtreiberstufe in der Regel Kalkmilch zugesetzt. Durch Substitution des Ammoniaks durch Calcium wird das Ammoniak freigesetzt und kann wie in der ersten Kolonne mit Wasserdampf ausgetrieben werden. Der Bodenablauf der Kalkkolonne enthält den Kalkschlamm, Calciumsulfat-sulfit-carbonat und andere Calciumverbindungen. In nachgeschalteten Absetzbecken wird der Schlamm abgeschieden und dann meistens in Deponien eingelagert.

Die Absetzzeit solcher Schlämme ist beträchtlich. Sie beträgt in der Regel drei bis fünf Stunden. Nach Ablauf der klaren Flüssigkeit bleibt ein Schlamm mit mindestens 50% Feuchtigkeit zurück. Er kann nur sehr mühevoll abgestochen und verladen werden. Die Deponie dieses Materials ist zudem nicht unproblematisch und im Rahmen der neuen Umweltgesetzgebung meist nicht gestattet.

Ein weiterer grosser Nachteil dieser Verfahrensweise ist, dass die Kalkkolonne je nach Zusammensetzung des Kokereiwassers in Abständen von einigen Monaten ausser Betrieb genommen werden muss. Dieser Stillstand ist notwendig, weil die Reaktionsprodukte des Calciums in der Kolonne und besonders auf den Austauschböden zum Teil steinharte Absetzungen bilden, die manuell entfernt werden müssen.

Es ist versucht worden, durch Zusatz von Inhibitoren derartige Verkrustungen zu vermeiden, jedoch sind die Kosten für geeignete Inhibitoren sehr hoch. Die Bildung von Absetzungen auf den Austauschböden wird hierdurch verzögert, aber nicht verhindert.

Ein anderer Vorschlag sieht vor, das Kokereiwasser vor Eintritt in die Abtreiberkolonne in einem gesonderten Gefäss mit Kalk zu vermischen, das Reaktionsprodukt absitzen zu lassen und die ablaufende klare Flüssigkeit einem Ammoniakabtrieb in bekannter Weise zu unterwerfen. Dieser Vorschlag hat den Nachteil, dass wegen der erforderlichen grossen Absetzzeit sehr grosse geschlossene Gefässe benötigt werden. Ausserdem befindet sich das nicht in die Dampfphasen übergehende Ammoniak anteilmässig in der Feuchtigkeit des abgesetzten Schlammes, was das Ausbringen, Verladen und Deponieren ausserordentlich erschwert. Eine Begasung des Schlammes mit z. B. Wasserdampf vor dem Ausbringen aus dem Gefäss ist aufwendig und auch kostspielig.

Bei dem aus der GB-A 1 007 118 bekannten Verfahren, von dem die Erfindung als Stand der Technik ausgeht, wird die wässrige Lösung in einen Mischtank eingeleitet, dem Kalk im Überschuss zugesetzt wird. Die Mischung gelangt dann nach Einblasen von Dampf in einen zweiten Mischtank, in dem das gebundene Ammoniak in freies Ammoniak überführt wird, und von da ab in einen Absetztank. Bei dem bekannten Verfahren wird das Fällungsprodukt ebenfalls als Schlamm abgezogen.

Der Erfindung liegt die Aufgabe zugrunde, im Rahmen eines Verfahrens zum Abtreiben von Ammoniak aus ammoniakhaltigen Lösungen Fällungsprodukte zu erhalten, die aus harten, schwerlöslichen, wasserfreien Granulaten bestehen.

Ausgehend von einem Verfahren der eingangs beschriebenen Art besteht die Erfindung darin, dass die wässrigen Lösungen aus der ersten Abtreiberkolonne sowie die in wässriger Lösung vorliegende Erdalkaliverbindung in den unteren, als Wirbelkammer ausgebildeten, zylindrischen Teil eines Reaktionsraumes mit einem sich nach oben zu konisch erweiternden Abschnitt durch ein Mischsystem eingeleitet werden, an dessen Mündung unmittelbar an oder nach dem Eintritt in den Reaktionsraum die innige Durchmischung erfolgt, und dass die Axialgeschwindigkeit der in dem Reaktionsraum befindlichen Flüssigkeit so eingestellt wird, dass das Fällungsprodukt im Schwebezustand gehalten wird und erst nach Erreichen eines bestimmten Durchmessers in den unteren Teil des Reaktionsraumes absinkt, aus dem es als trockenes Granulat abgezogen wird, während die behandelte klare Lösung am oberen Abschnitt des Reaktionsbehälters abgezogen wird.

Erfindungsgemäss beträgt die Verweilzeit der Lösung in dem Reaktionsraum 5 bis 60, vorzugsweise 12 bis 30 min.

Zweckmässige Ausführungen des Verfahrens sehen ferner vor, die zu behandelnde Lösung und die Erdalkaliverbindung tangential in den Reaktionsraum einzuleiten, zusätzlich eine Kontaktmasse, wie z. B. Quarzsand oder gemahlenes Calciumcarbonat in den Reaktionsraum einzuschlämmen sowie einen Teil des behandelten Wassers aus dem Reaktionsraum abzuziehen und im Kreislauf wieder in den unteren Abschnitt des Reaktionsraumes zurückzuleiten. Die Konzentration der in den Reaktionsraum eingeleiteten Lösung an Ammoniaksalzen ist vorzugsweise kleiner als 10 Gew.-%. Bei einer zweckmässigen Ausführungsform der Erfindung ist ferner vorgesehen, die in den Reaktionsraum eingeleitete Menge der in wässriger Lösung vorliegenden Erdalkaliverbindung in Abhängigkeit von dem pH-Wert des behandelten Wassers zu regeln.

Gegenstand der Erfindung ist ferner eine Vorrichtung zur Durchführung des Verfahrens mit einem Reaktionsraum, der aus einer zylindrischen Wirbelkammer mit einem sich daran nach oben anschliessenden, sich konisch erweiternden Abschnitt besteht, wobei das Mischsystem zum Einleiten der Reaktionsflüssigkeiten in der Wirbelkammer angeordnet und am oberen Abschnitt des Reaktionsbehälters ein Abzug für die behandelte Lösung und im unteren Teil ein Abzug für das Granulat vorgesehen ist.

Eine zweckmässige Ausführungsform der Erfindung sieht vor, dass sich an den oberen Rand des konusförmigen Abschnittes eine senkrecht nach unten verlaufende Schürze anschliesst, dass der konusförmige Abschnitt und die Schürze in einem zylindrischen Behälter mit einem konisch eingezogenen Boden angeordnet sind und dass zwischen der Schürze der Wandung des Behälters ein Ringraum gebildet wird, wobei der Ablaufstutzen für die behandelte Flüssigkeit aus dem oberen Abschnitt des Raumes zwischen der Schürze und der Wandung des konischen Abschnittes nach aussen geführt ist. Der Winkel des konusförmigen Abschnittes beträgt 10 bis 30, vorzugsweise 15 bis 25°.

Zweckmässigeweise ist der untere Stutzen zum Abziehen der gebildeten Granulate durch den konisch eingezogenen Boden des Behälters nach aussen geführt. Zum Einführen der Reaktionsflüssigkeit in die Wirbelkammer hat sich die Verwendung einer Zweistoffdüse als vorteilhaft erwiesen, die die Medien koaxial durchströmen.

Mit dem Verfahren gemäss vorliegender Erfindung ist es möglich, ein Granulat zu gewinnen, dessen Korngrösse nahezu beliebig einstellbar ist. Das Granulat kann in einfacher Weise entweder einer Deponie zugefügt oder auch anderweitig verwertet werden. So ist es z. B. möglich, das Granulat dem Eisenerz auf einem Sinterband zuzumischen. Eine andere Möglichkeit der Wiederverwendung besteht darin, das gewonnene Granulat in einem Schacht- oder Wirbelbettofen zu brennen und das dabei anfallende Calciumoxid wiederum zur Herstellung von Kalkmilch zu verwenden. Auf diese Weise ist ein totales Recycling möglich.

Die Reaktion der Erdalkaliverbindungen, z. B. des Calciumhydroxids, mit den Ammoniakverbindungen unmittelbar nach der Mischung an der Düsenmündung erfolgt spontan. Die Reaktionsprodukte werden durch die in der Wirbelkammer herrschende, ausreichend grosse Aufströmgeschwindigkeit, insbesondere bei tangentialer Einführung der Reaktionslösungen, nach oben bewegt und bilden dabei kugelförmige Granulate. Die Höhe des sich an die Wirbelkammer anschliessenden Abschnittes wird so gewählt, dass eine genügend grosse Verweilzeit erreicht wird. Entsprechend der Schwebegeschwindigkeit steigen die kleineren Granulate in den konischen Abschnitt des Reaktors bis zu einer Höhe auf, die etwa ¼ der Gesamthöhe beträgt. Beim Übergang der zylindrischen Wirbelkammer in den konisch erweiterten Abschnitt wird ein Impuls wirksam, der zu einer Rückströmung an der Wandung des konusförmigen Abschnittes und damit zu einer Rückführung kleinerer Granulate bis an die Wirbelkammer führt. Auf diese Weise werden die kleineren Granulate mit neuen Reaktionsprodukten in Berührung gebracht und können sich weiter aufbauen.

Wenn die gebildeten Reaktionsprodukte keine Bereitschaft zur Kornbildung haben, besteht die Möglichkeit, zu deren Unterstützung eine Kontaktmasse, z. B. Quarzsand oder gemahlenes Calciumcarbonat, mit einer Körnung von vorzugsweise 0,2 bis 1 mm einzuschleusen. Dies kann durch den Behälter erfolgen, der die einzusetzende Erdalkaliverbindung enthält.

Die Schwebegeschwindigkeit des gebildeten Granulates hängt bekanntlich vom spezifischen Gewicht und dem Durchmesser der einzelnen Granulate ab. Wenn sich Granulate zu einer Grösse aufbauen, bei der zur Erhaltung des Schwebezustandes eine grössere Axialgeschwindigkeit erforderlich ist, als sie tatsächlich in der Apparatur herrscht, dann sinken diese Granulate durch die Schwerkraft nach unten und können entweder kontinuierlich oder chargenweise an einer geeigneten Stelle abgezogen werden. Zur Erzeugung eines Granulates mit einem bestimmten Durchmesser sieht die Erfindung vor, einen Teil des im Reaktor behandelten Wassers in die Wirbelkammer zurückzuführen. Dieser Teilstrom ist regelbar und dient zur Einstellung der gewünschten Axialgeschwindigkeit und damit des Durchmessers der absinkenden Granulate.

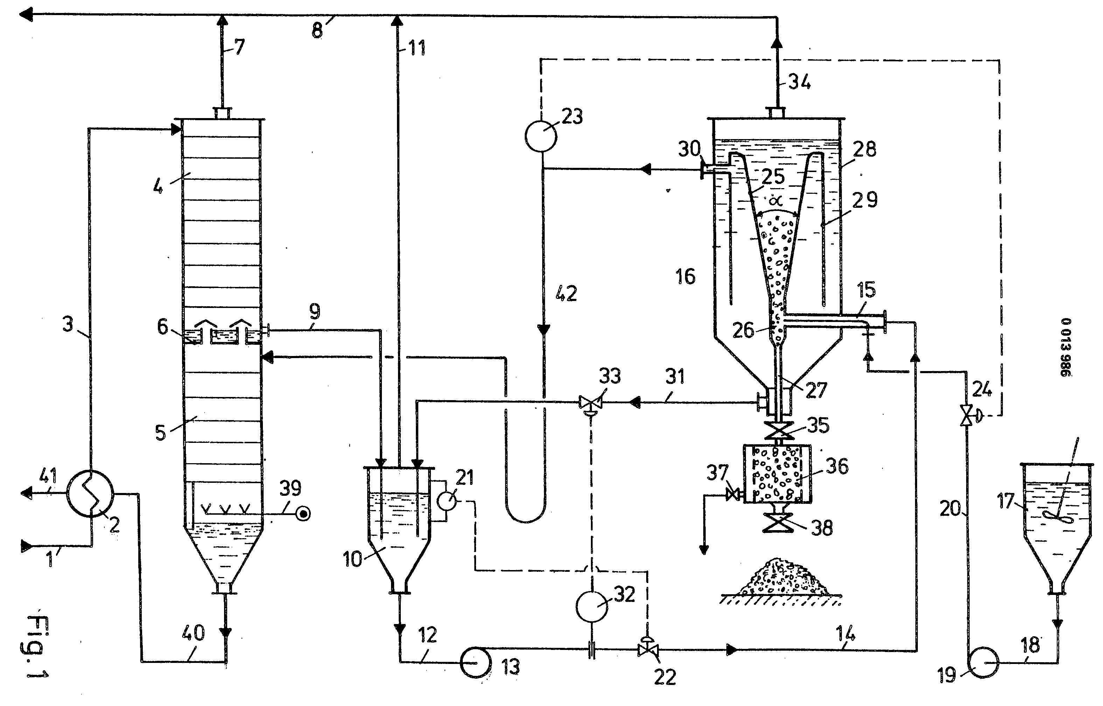

Auf der Zeichnung ist ein Ausführungsbeispiel der Erfindung für den Fall der Behandlung einer wässrigen Lösung dargestellt, die sowohl freies als auch gebundenes Ammoniak enthält. Dabei kann es sich beispielsweise um Kokereiwasser handeln.

Das zu behandelnde Wasser tritt über die Leitung 1, den Wärmeaustauscher 2, in dem es gegen den Sumpfablauf vorgewärmt wird und die Leitung 3 in die obere Abtreiberkolonne 4 ein. Über eine Anzahl von Austauschböden, auf denen es mit den Dämpfen, die von der unteren Abtreiberkolonne 5 aufsteigen, in Berührung gebracht wird, fliesst das Wasser unter Abgabe des Ammoniaks nach unten und wird auf dem Tüllenboden 6 aufgefangen. Zusammen mit den Dämpfen aus der unteren Kolonne 5, die ebenfalls Ammoniak enthalten, verlässt das freigesetzte Ammoniak die obere Kolonne 4 über die Leitung 7 und 8 zur weiteren Verwendung.

Oberhalb des Tüllenbodens 6 ist an die Kolonne die Überlaufleitung 9 angeschlossen, durch die das vom freien Ammoniak befreite Wasser in die Pumpenvorlage 10 abläuft. Diese Vorlage ist durch die Leitung 11 in die Dämpfeleitung 8 hinein entlüftet. Über die Leitung 12 fliesst das vorbehandelte Wasser der Pumpe 13 zu, von der es durch die Leitung 14 in die Zweistoffdüse 15 des Reaktors 16 gefördert wird. Der Flüssigkeitsstand der Pumpenvorlage 10 wird dabei durch den Regler 21 und das Regelventil 22 gehalten.

Die für die Reaktion notwendige Kalkmilch befindet sich in dem Behälter 17. Sie wird über die Leitung 18, die Pumpe 19 und die Leitung 20 ebenfalls zur Zweistoffdüse 15 gefördert. Die Regelung der Kalkmilchmenge geschieht durch einen pH-Wertregler 23, der das Ventil 24 steuert.

Der Reaktor 16 besteht aus einer zylindrischen Wirbelkammer 26, an die sich nach oben ein konusförmig erweiterter Abschnitt 25 anschliesst. Mit 27 ist ein Austragrohr bezeichnet, das vom unteren Ende der Wirbelkammer 26 ausgeht. Die Zweistoffdüse 15 ist mit der Wirbelkammer fest verbunden. Am oberen Ende geht der konusförmige Abschnitt 25 in eine zylindrische Schürze 29 über, die den Abschnitt 25 umschliesst. Die Schürze, der konusförmige Abschnitt, die Wirbelkammer und das Ablaufrohr sind von einem äusseren zylindrischen Behälter 28 so umschlossen, dass zwischen seiner inneren Wand und der Schürze 29 ein Ringraum gebildet wird, durch den das oben aus dem konusförmigen Abschnitt ablaufende Wasser langsam nach unten abfliessen kann. Die Flüssigkeit steigt dann in dem Raum, der von dem konusförmigen Abschnitt 25 und der Schürze 29 gebildet wird, nach oben und verlässt die Apparatur über den Stutzen 30.

Der gesamte, zwischen dem konusförmigen Abschnitt 25 und dem Behälter liegende Raum dient der Absetzung eventuell nach oben aus dem Konus ausgetragener Mikrogranulate, die sich im unteren, konisch zulaufenden Aussenbehälter sammeln können und über die Leitung 31 in geregeltem Strom zur Pumpenvorlage 10 gelangen. Neben der Rückführung des Mikrogranulats dient dieser Strom der Regelung des Durchmessers der aus dem Ablaufrohr 27 abfliessenden Granulate, in dem durch den Regler 32, der in die Leitung 14 eingreift, das Ventil 33 so angesteuert wird, dass sich in der Wirbelkammer 26 die gewünschte Axialgeschwindigkeit einstellt.

Granulate, die sich bis zu einem der Schwebegeschwindigkeit entsprechenden Durchmesser aufgebaut haben, sinken durch das Austragsrohr 27 und den geöffneten Schieber 35 in einen Auffangbehälter 36 ab. Bei gefülltem Behälter wird der Schieber 35 geschlossen und der Schieber 37 zum Ablass der enthaltenen Flüssigkeit geöffnet. Nach erfolgter Entwässerung kann das trockene Granulat über den Schieber 38 auslaufen.

Das im Reaktor 16 behandelte Wasser enthält das Ammoniak nur noch in nicht gebundener, d.h. physikalisch gelöster, Form. Je nach Temperatur und Druck geht ein Teil des Ammoniaks schon in die Dampfphase über, die über die Leitung 34 der Dämpfeleitung 8 zugeführt wird.

Das am Stutzen 30 ablaufende klare Wasser, das das Calciumhydroxid zur Einstellung des für den Abtrieb erforderlichen pH-Wertes nur in gelöster Form enthält, gelangt über die Leitung 42 oben auf die untere Abtreiberkolonne 5. Das über eine Anzahl von Austauschböden nach unten fliessende Wasser wird auf diesen mit dem über die Leitung 39 eingeblasenen Abtreiberdampf in Berührung gebracht und gibt sein Ammoniak an diesen ab. Das vom Ammoniak befreite Wasser verlässt den Sumpf der Kolonne 5 über die Leitung 40, gibt einen Teil seiner Wärme in dem Wärmeaustauscher an die eintretende Lösung ab und wird über die Leitung 41 weiterer Verwendung zugeführt.

Beispiel

Ein Kokereiwasser wurde im oberen Teil einer Abtreiberkolonne, wie vorher beschrieben, vorbehandelt. Das am Tüllenboden ablaufende Wasser wurde dann mit einer Temperatur von 85°C in den Reaktor eingefahren bei gleichzeitiger Zuspeisung einer 3%igen $Ca(OH)_2$-Lösung. Die Kalkmilchmenge wurde so eingestellt, dass sich am Austritt des Reaktors ein pH-Wert von 10,5–11,5 ergab.

Die Geschwindigkeit am Austritt aus der Zweistoffdüse betrug 2,0 m/s und die Axialgeschwindigkeit in der Wirbelkammer 0,14 m/s. Bei der gewählten Apparatur betrug der Konuswinkel $\alpha = 21°$, die Verweilzeit im Konus 18 min.

In der nachfolgenden Tabelle sind die Werte des Wassers am Ein- und Ausgang des Reaktors zusammengestellt:

| mg/l | Eingang | Ausgang |
|---|---|---|
| Phenol total | 344 | 259 |
| Phenol, wasserdampfflüchtig | 300 | 258 |
| $NH_3$ total | 2200 | 1615 |
| $NH_3$ gebunden | 1637 | 7 |
| $NH_3$ frei | 563 | 1608 |

| mg/l | Eingang | Ausgang |
|---|---|---|
| Cl | 3373 | 2574 |
| SO$_4$ | 133 | 101 |
| S$_2$O$_3$ | 1065 | 696 |
| SCN | 278 | 272 |
| CN | 4,9 | 3,1 |

Das aus dem Reaktor ablaufende Wasser wurde in einer zweiten Abtreiberkolonne mit Wasserdampf behandelt. Der Gesamtwert des ausfliessenden Wassers an Ammoniak betrug 20 mg/l. Der Granulatabzug wurde nach einer Betriebsdauer von ca. 36 h eingeleitet. Die Korngrösse des Granulats lag bei 2–3 mm.

Die Tabelle zeigt, dass neben der Entfernung des gebundenen Ammoniaks aus dem Kokereiwasser weitere Stoffe, wie Chlorionen, Phenole, Thiosulfat, stark reduziert werden. Diese Reduzierung wirkt sich günstig auf etwaige nachfolgende biologische Behandlungen aus.

Versuche mit anderen ammoniakhaltigen Lösungen, wie z. B. Ammoniumsulfat und Ammoniumsulfit, wie sie bei der Abgasentschwefelung mit ammoniakhaltigen Lösungen anfallen, ergaben ebenfalls ein positives Ergebnis beim Einsatz des vorgeschlagenen Verfahrens. Zweckmässigerweise sollte die Konzentration der Ammoniaksalze dieser Lösung an der Zweistoffdüse kleiner als 10 Gew.-% sein. Beim Einsatz von hochkonzentrierten Lösungen wird die Maximalkonzentration an der Zweistoffdüse leicht durch eine entsprechende Rückführung des behandelten Wassers über die Leitung 31, die Pumpenvorlage 10, die Leitung 12, die Pumpe 13 und die Leitung 14 erreicht. Da solche Lösungen in der Regel kein freies Ammoniak enthalten, kann die oberste Abtreiberstufe entfallen.

**Patentansprüche**

1. Verfahren zum Abtreiben von Ammoniak aus ammoniakhaltigen Lösungen, insbesondere Kokereiwässern, bei dem das in den Lösungen enthaltene freie Ammoniak in einer ersten Abtreiberkolonne durch Einleiten von Dampf ausgetrieben und die Lösungen sowie eine in wässriger Lösung vorliegende Erdalkaliverbindung in einen Reaktionsraum eingeleitet und darin durchmischt werden, worauf das in Wasser schwerlösliche Fällungsprodukt der Erdalkaliverbindung aus dem Reaktionsraum abgezogen und die behandelte klare Lösung in eine zweite Abtreiberkolonne geleitet wird, dadurch gekennzeichnet, dass die wässrigen Lösungen aus der ersten Abtreiberkolonne sowie die in wässriger Lösung vorliegende Erdalkaliverbindung in den unteren, als Wirbelkammer ausgebildeten, zylindrischen Teil eines Reaktionsraumes mit einem sich nach oben zu konisch erweiternden Abschnitt durch ein Mischsystem eingeleitet werden, an dessen Mündung unmittelbar an oder nach dem Eintritt in den Reaktionsraum die innige Durchmischung erfolgt, und dass die Axialgeschwindigkeit der in dem Reaktionsraum befindlichen Flüssigkeit so eingestellt wird, dass das Fällungsprodukt im Schwebezustand gehalten wird und erst nach Erreichen eines bestimmten Durchmessers in den unteren Teil des Reaktionsraumes absinkt, aus dem es als trockenes Granulat abgezogen wird, während die behandelte klare Lösung am oberen Abschnitt des Reaktionsbehälters abgezogen wird.

2. Verfahren nach Anspruch 1, dadurch gekennzeichnet, dass die Verweilzeit der Lösung in dem Reaktionsraum 5 bis 60 min, vorzugsweise 12 bis 20 min, beträgt.

3. Verfahren nach den Ansprüchen 1 und 2, dadurch gekennzeichnet, dass die zu behandelnde Lösung und die Erdalkaliverbindung tangential in den Reaktionsraum eingeleitet werden.

4. Verfahren nach den Ansprüchen 1 bis 3, dadurch gekennzeichnet, dass in den Reaktionsraum zusätzlich eine Kontaktmasse, wie z. B. Quarzsand oder gemahlenes Calciumkarbonat, eingeschlemmt wird.

5. Verfahren nach den Ansprüchen 1 bis 4, dadurch gekennzeichnet, dass ein Teil des behandelten Wassers aus dem Reaktionsraum abgezogen und im Kreislauf wieder in den unteren Abschnitt des Reaktionsraumes zurückgeleitet wird.

6. Verfahren nach den Ansprüchen 1 bis 5, dadurch gekennzeichnet, dass die Konzentration der in den Reaktionsraum eingeleiteten Lösung an Ammoniaksalzen kleiner als 10 Gew.-% ist.

7. Verfahren nach den Ansprüchen 1 bis 5, dadurch gekennzeichnet, dass die in den Reaktionsraum eingeleitete Menge der in wässriger Lösung vorliegenden Erdalkaliverbindung in Abhängigkeit von dem pH-Wert des behandelten Wassers geregelt wird.

8. Vorrichtung zur Durchführung des Verfahrens nach den Ansprüchen 1 bis 7, dadurch gekennzeichnet, dass der Reaktionsraum aus einer zylindrischen Wirbelkammer (26) mit einem sich daran nach oben anschliessenden, sich konisch erweiternden Abschnitt (25) besteht, wobei das Mischsystem zum Einleiten der Reaktionsflüssigkeiten in der Wirbelkammer (26) angeordnet und am oberen Abschnitt des Reaktionsbehälters ein Abzug für die behandelte Lösung und im unteren Teil ein Abzug für das Granulat vorgesehen ist.

9. Vorrichtung nach Anspruch 8, dadurch gekennzeichnet, dass sich an den oberen Rand des konusförmigen Abschnittes (25) eine senkrecht nach unten verlaufende Schürze (29) anschliesst, dass der konusförmige Abschnitt (25) und die Schürze (29) in einem zylindrischen Behälter (28) mit einem konisch eingezogenen Boden angeordnet sind und dass zwischen der Schürze (29) der Wandung des Behälters (28) ein Ringraum gebildet wird, wobei der Ablaufstutzen für die behandelte Flüssigkeit aus dem oberen Abschnitt des Raumes zwischen der Schürze (29) und der Wandung des konischen Abschnittes (25) nach aussen geführt ist.

10. Vorrichtung nach den Ansprüchen 8 und 9, dadurch gekennzeichnet, dass der Winkel des Abschnittes (25) 10 bis 30°, vorzugsweise 15 bis 25°, beträgt.

11. Vorrichtung nach den Ansprüchen 9 und 10, dadurch gekennzeichnet, dass der untere Stutzen zum Abziehen der gebildeten Granulate durch den konisch eingezogenen Boden des Behälters (28) nach aussen geführt ist.

12. Vorrichtung nach den Ansprüchen 8 bis 11, dadurch gekennzeichnet, dass zum Einführen der Reaktionsflüssigkeiten in die Wirbelkammer (26) eine Zweistoffdüse (15) verwendet wird, die die Medien koaxial durchströmen.

**Claims**

1. A process for the removal of ammonia from ammonia-containing solutions, more particularly coke oven waters, in which the free ammonia present in the solutions is separated in a first distillation column by the introduction of steam and the solutions and an alkaline earth compound present in aqueous solution are introduced into a reaction chamber and mixed thoroughly therein, whereafter the difficulty watersoluble precipitation product of the alkaline earth compound is removed from the reaction chamber and the treated clear solution is fed to a second distillation column, characterised in that the aqueous solutions from the first distillation column and the alkaline earth compound present in aqueous solution are introduced by a mixing system into the bottom cylindrical eddy chamber part of a reaction chamber having a conically upwardly widening portion, the thorough mixing occurring at the orifice of the mixing system immediately upon or after the entry into the reaction chamber, and the axial velocity of the liquid in the reaction chamber is so adjusted that the precipitation product remains in suspension, dropping into the bottom part of the reaction chamber only upon reaching a predetermined diameter, the precipitation product being removed as a dry granulate from the reaction chamber, whereas the treated clear solution is removed from the top part of the reaction tank.

2. A process according to claim 1, characterised in that the dwell time of the solution in the reaction chamber is from 5 to 60 minutes, preferably from 12 to 20 minutes.

3. A process according to claims 1 and 2, characterised in that the solution to be treated and the alkaline earth compound are introduced into the reaction chamber tangentially.

4. A process according to claims 1 to 3, characterised in that a contact composition, such as quartz sand or ground calcium carbonate, is also introduced into the reaction chamber.

5. A process according to claims 1 to 4, characterised in that some of the treated water is removed from the reaction chamber and recycled to the bottom part of the reaction chamber.

6. A process according to claims 1 to 5, characterised in that the ammonia salts concentration of the solution introduced into the reaction chamber is less than 10 weight %.

7. A process according to claims 1 to 5, characterised in that the quantity of alkaline earth compound present in aqueous solution introduced into the reaction chamber is adjusted in dependence upon the pH value of the treated water.

8. Apparatus for performing the process according to claims 1 to 7, characterised in that the reaction chamber takes the form of a cylindrical eddy chamber (26) merging at the top to a conically widening portion (25), the mixing system for introducing the reaction liquids being disposed in the eddy chamber (26), a discharge for the treated solution being provided at the top portion of the reaction tank and a discharge for the granulate being provided in the bottom portion.

9. An apparatus according to claim 8, characterised in that the top edge of the conical portion (25) merges into a vertically downwardly extending skirt (29), the same and the conical portion (25) are disposed in a cylindrical tank (28) having a conically narrowing base, and the skirt (29) and the wal of the tank (28) bound an annular chamber, the discharge beard or the like for the treated liquid extending outwardly from the top portion or the chamber or gap between the skirt (29) and the wall of the conical part (25).

10. An apparatus according to claims 8 and 9, characterised in that the angle of the conical portion (25) is from 10 to 30°, preferably from 15 to 25°.

11. An apparatus according to claims 9 and 10, characterised in that the bottom beard or the like for removal of the granulates is extended outwardly by the conically narrowing base of the tank (28).

12. An apparatus according to claims 8 to 11, characterised in that a binary nozzle (15) through which the reaction liquids flow coaxially is used to introduced the same into the eddy chamber (26).

**Revendications**

1. Procédé pour l'élimination d'ammoniac de solutions ammoniacales, en particulier des eaux de cokerie, dans lequel à l'intérieur d'une première colonne d'entraînement l'ammoniac libre contenu dans les solutions est éliminé par introduction de vapeur et les solutions ainsi qu'un composé alcalino-terreux présenté sous forme de solution aqueuse sont introduits dans une chambre de réaction et mélangés intimement dans celle-ci, après quoi le produit de précipitation, difficilement soluble dans l'eau, du composé alcalinoterreux est évacué de la chambre de réaction et la solution claire traitée est envoyée dans une seconde colonne d'entraînement, caractérisé en ce que les solutions aqueuses sortant de la première colonne d'entraînement ainsi que le composé alcalino-terreux présenté sous la forme d'une solution aqueuse sont introduits dans la partie cylindrique inférieure, réalisée sous forme de chambre de tourbillonnement, d'une chambre de réaction comportant une partie s'élargissant coniquement vers le haut par un système de mélange au niveau de l'embouchure duquel le mélange intime se réalise immédiatement à l'entrée ou après l'entrée dans la chambre de réaction, et en ce que la vitesse axiale du liquide se trouvant dans la chambre de réaction est réglée de façon que le produit de précipitation soit maintenu en suspension et ne se dépose qu'après avoir atteint un certain diamètre dans la partie inférieure de la chambre de réaction d'où il est évacué en tant que matière granulaire sèche, alors que la solution claire traitée est évacuée à la partie supérieure de la cuve de réaction.

2. Procédé selon la revendication 1, caractérisé en ce que le temps de séjour de la solution dans la chambre de réaction est de 5 à 60 minutes, de préférence de 12 à 10 minutes.

3. Procédé selon la revendication 1 ou 2, caractérisé en ce que la solution à traiter et le composé alcalinoterreux sont introduits tangentiellement dans la chambre de réaction.

4. Procédé selon l'une quelconque des revendications 1 à 3, caractérisé en ce qu'en outre une matière de contact, comme par exemple du sable quartzeux ou du carbonate de calcium broyé, est introduite sous forme de boue dans la chambre de réaction.

5. Procédé selon l'une quelconque des revendications 1 à 4, caractérisé en ce qu'une partie de l'eau traitée est évacuée de la chambre de réaction et renvoyée, par recyclage, dans la partie inférieure de la chambre de réaction.

6. Procédé selon l'une quelconque des revendications 1 à 5, caractérisé en ce que la concentration en sels ammoniacaux de la solution introduite dans la chambre de réaction est inférieure à 10% en poids.

7. Procédé selon l'une quelconque des revendications 1 à 5, caractérisé en ce que le débit du composé alcalinoterreux présenté sous forme de solution aqueuse entrant dans la chambre de réaction est réglé en fonction du pH de l'eau traitée.

8. Dispositif pour la mise en oeuvre du procédé selon l'une quelconque des revendications 1 à 7, caractérisé en ce que la chambre de réaction est constituée par une chambre de tourbillonnement cylindrique (26) à partir de laquelle s'étend vers le haut une partie s'élargissant coniquement (25), le système de mélange pour l'introduction des liquides réactionnels étant disposé dans la chambre de tourbillonnement (26) et une sortie pour la solution traitée étant prévue à la partie supérieure de la cuve de réaction et une sortie pour la matière granulaire dans la partie inférieure de la cuve.

9. Dispositif selon la revendication 8, caractérisé en ce qu'au bord supérieur de la partie conique (25) fait suite un tablier (29) s'étendant verticalement vers le bas, en ce que la partie conique (25) et le tablier (29) sont disposés dans une cuve cylindrique (28) présentant un fond se rétrécissant coniquement et en ce qu'un espace annulaire est formé entre le tablier (29) et la paroi de la cuve (28), la tubulure de sortie pour le liquide traité s'étendant vers l'estérieur à partir de la partie supérieure de l'espace entre le tablier (29) et la paroi de la partie conique (25).

10. Dispositif selon la revendication 8 ou 9, caractérisé en ce que l'angle de la partie (25) est de 10 à 30°, de préférence de 15 à 25°.

11. Dispositif selon la revendication 9 ou 10, caractérisé en ce que la tubulure inférieure pour l'évacuation de la matière en grains formée s'étend vers l'extérieur à travers le fond se rétrécissant coniquement de la cuve (28).

12. Dispositif selon l'une quelconque des revendications 8 à 11, caractérisé en ce que pour l'introduction des liquides réactionnels dans la chambre de tourbillonnement (26) est utilisée une buse pour deux substances (15) que les fluides parcourent coaxialement.

Fig. 1

0 013 986